# EUROPÄISCHE PATENTANMELDUNG

(11) **EP 2 063 242 A1**
(43) Veröffentlichungstag der Anmeldung: **27.05.2009**
(21) Anmeldenummer: 07022195.7
(22) Anmeldetag: 15.11.2007
(51) Int. Cl.: G01K 1/08

(54) **Temperatursensoranordnung und Verfahren zu deren Herstellung**

(71) Anmelder: Carl Freudenberg KG, 69469 Weinheim (DE)
(72) Erfinder: Lauer, Frank, 69168 Wiesloch (DE); Ziegler, Günter, 68259 Mannheim (DE); Unger, Hans, 69518 Absteinach (DE); Röhner, Gerhard, 69502 Hernsbach (DE)

(57) **Zusammenfassung**

Temperatursensoranordnung, umfassend einen Temperatursensor (1), der an einem stirnseitigen Ende (2) eines mit einer Isolierung (3) ummantelten Elektrokabels (4) angeordnet und mit diesem elektrisch leitend verbunden ist. Der Temperatursensor (1) ist von einer Schutzkappe (5) aus elastomerem Werkstoff dichtend umschlossen, wobei der dem Boden (6) der Schutzkappe (5) axial abgewandte stirnseitig offene Rand (7) der Schutzkappe (5) mit der Isolierung (3) des Elektrokabels (4) kraft- und/oder form- und/oder stoffschlüssig dichtend verbunden ist.

In einem ersten Verfahrenschritt wird ein erstes beheizbares Vulkanisationswerkzeug zur Herstellung der Schutzkappe (5) so temperiert, dass die Schutzkappe (5) mit Ausnahme des offenen Rands (7) ausvulkanisiert wird, wobei in einem zweiten Verfahrenschritt die Schutzkappe aus dem ersten Vulkanisationswerkzeug entformt und in einem dritten Verfahrenschritt über den Temperatursensor (1) auf das dem Temperatursensor (1) zugewandte Ende (2) des Elektrokabels (4) aufgesteckt wird. In einem vierten Verfahrenschritt wird das Elektrokabel (4) mit aufgesteckter Schutzkappe (5) in ein zweites beheizbares Vulkanisationswerkzeug eingelegt und der bis dahin nicht ausvulkanisierte offene Rand (7) der Schutzkappe (5) auf die Isolierung (3) gedrückt und unter Zufuhr von Wärme ausvulkanisiert und gleichzeitig mit der Isolierung (3) dichtend verbunden.

## Beschreibung

### Technisches Gebiet

Die Erfindung betrifft eine Temperatursensoranordnung, umfassend einen Temperatursensor, der an einem stirnseitigen Ende eines mit einer Isolierung ummantelten Elektrokabels angeordnet und mit diesem elektrisch leitend verbunden ist.

### Stand der Technik

Derartige Temperatursensoranordnungen sind allgemein bekannt, wobei sich der Temperatursensor ungeschützt vor äußeren Einflüssen in dem Medium befindet, dessen Temperatur sensiert werden soll.
In vielen Anwendungsfällen ist diese ungeschützte Anordnung des Temperatursensors wenig zufriedenstellend, insbesondere dann, wenn die Temperatur eines aggressiven Mediums bestimmt werden soll.

### Darstellung der Erfindung

Der Erfindung liegt die Aufgabe zu Grunde, eine Temperatursensoranordnung der eingangs genannten Art derart weiterzuentwickeln, dass mittels des Temperatursensors auch Temperaturen von aggressiven Medien während einer langen Gebrauchsdauer zuverlässig sensiert werden können und dass die Temperatursensoranordnung prozesssicher, einfach und kostengünstig herstellbar ist.

Diese Aufgabe wird erfindungsgemäß mit den Merkmalen der Ansprüche 1 und 4 gelöst. Auf vorteilhafte Ausgestaltungen/Weiterbildungen nehmen die jeweils darauf rückbezogenen Unteransprüche Bezug.

Zur Lösung der Aufgabe ist es vorgesehen, dass der Temperatursensor von einer Schutzkappe aus elastomerem Werkstoff dichtend umschlossen ist und dass der dem Boden der Schutzkappe axial abgewandte stirnseitig offene Rand der Schutztruppe mit der Isolierung des Elektrokabels kraft- und/oder form- und/oder stoffschlüssig dichtend verbunden ist.

Bei einer derartigen Ausgestaltung ist von Vorteil, dass der Temperatursensor mit dem Medium, dessen Temperatur sensiert werden soll, nicht unmittelbar in Berührung kommt; dadurch können auch Temperaturen von aggressiven Medien sensiert werden, die den Temperatursensor angreifen würden, wenn sie unmittelbar mit ihm in Berührung kämen. Die Schutzkappe umschließt den Temperatursensor hermetisch dicht.

Gemäß einer vorteilhaften Ausgestaltung kann es vorgesehen sein, dass der Rand eine Haltegeometrie zur Befestigung an einem Maschinenelement aufweist. Die Haltegeometrie kann genutzt werden, um die Temperatursensoranordnung beispielsweise mit einem Halteflansch eines Gehäuses zu verbinden, der in die Haltegeometrie eingreift. Dadurch wird eine definierte und sichere Positionierung der Temperatursensoranordnung am jeweiligen Maschinenelement erreicht.

Die Schutzkappe besteht bevorzugt aus einem auf das Einsatzmedium optimierten Elastomer, Ein derartiger Werkstoff ist gegen viele aggressive Werkstoffe resistent und deshalb als Schutzkappe für den Temperatursensor besonders gut geeignet.

Thermoplastische Elastomerwerkstoffe (TPE) sind demgegenüber für den zuvor geschilderten Anwendungsfall weniger gut geeignet, da ihre Medien- und Temperaturbeständigkeit erheblich eingeschränkt ist.

Die Schutzkappe weist bevorzugt eine Dicke von 1 bis 4 mm auf. Durch den genannten Dickenbereich ist einerseits ein ausgezeichneter Schutz des Temperatursensors vor schädlichen äußeren Einflüssen gegeben, und andererseits wird die Reaktionszeit des Temperatursensors nahezu nicht nachteilig beeinflusst. Für Anwendungsfälle, bei denen häufige Temperaturänderungen sensiert werden sollen, ist das von hervorzuhebendem Vorteil.

Außerdem betrifft die Erfindung ein Verfahren zur Herstellung einer Temperatursensoranordnung und einer Schutzkappe, wobei in einem ersten Verfahrenschritt ein erstes beheizbares Vulkanisationswerkzeug zur Herstellung der Schutzkappe so temperiert wird, dass die Schutzkappe mit Ausnahme des offenen Rands ausvulkanisiert wird, wobei in einem zweiten Verfahrenschritt die Schutzkappe aus dem ersten Vulkanisationswerkzeug entformt und in einem dritten Verfahrenschritt über den Temperatursensor auf das dem Temperatursensor zugewandte Ende des Elektrokabels aufgesteckt wird, wobei in einem vierten Verfahrenschritt das Elektrokabel mit aufgesteckter Schutzkappe in ein zweites beheizbares Vulkanisationswerkzeug eingelegt und der bis dahin nicht ausvulkanisiert der offene Rand der Schutzkappe auf die Isolierung gedrückt und unter Zufuhr von Wärme ausvulkanisiert und gleichzeitig mit der Isolierung dichtend verbunden wird.
Das zuvor beschriebene Verfahren ist einfach und kostengünstig durchführbar. Der Temperatursensor ist von der Schutzkappe mit allseitigem Abstand umschlossen, weil nur der Rand mit der Isolierung des Elektrokabels dichtend verbunden ist. Dadurch ist die Temperatursensoranordnung besonders prozesssicher herstellbar. Bevorzugt ist der Rand der Schutzkappe mit der Isolierung des Elektrokabels stoffschlüssig verbunden, Während des vierten Verfahrenschritts wird die Isolierung des Elektrokabels angeschmolzen, so dass sich die Oberfläche der Isolierung mit dem ausvulkanisierten offenen Rand der Schutzkappe stoffschlüssig und dicht verbindet. Zusätzlich besteht die Möglichkeit, die Oberfläche der Isolierung mit einer Profilierung zu versehen, die eine Verkrallung der Isolierung mit der Schutzkappe begünstigt.
Davon abweichend sind auch kraft- und/oder formschlüssige Verbindungen möglich. Während des vierten Verfahrenschritts kann in einem weiteren Verfahrenschritt zusätzliches Elastomer im Bereich des offenen Rands der Schutzkappe eingespritzt werden. Durch das Hinzudosieren von Elastomer kann der Anpresseffekt des offenen Rands an die Isolierung während des vierten Verfahrenschritts verbessert werden.

### Kurzbeschreibung der Zeichnung

Zwei Ausführungsbeispiele einer erfindungsgemäßen Temperatursensoranordnung und das Verfahren zu deren Herstellung werden nachfolgend anhand der Figuren 1 bis 3 näher beschrieben. Diese zeigen:
- Fig. 1:: eine Schutzkappe im Anschluss an den ersten Verfahrenschritt,
- Fig. 2:: den vierten Verfahrenschritt und ein erstes Ausführungsbeispiele einer gebrauchsfertigen Temperatursensoranordnung,
- Fig. 3:: ein zweites Ausführungsbeispiel einer gebrauchsfertigen Temperatursensoranordnung, die abweichend zum Ausführungsbeispiel aus Fig. 2 zusätzlich eine Haltegeometrie zur Befestigung an einem Maschinenelement aufweist.

### Ausführung der Erfindung

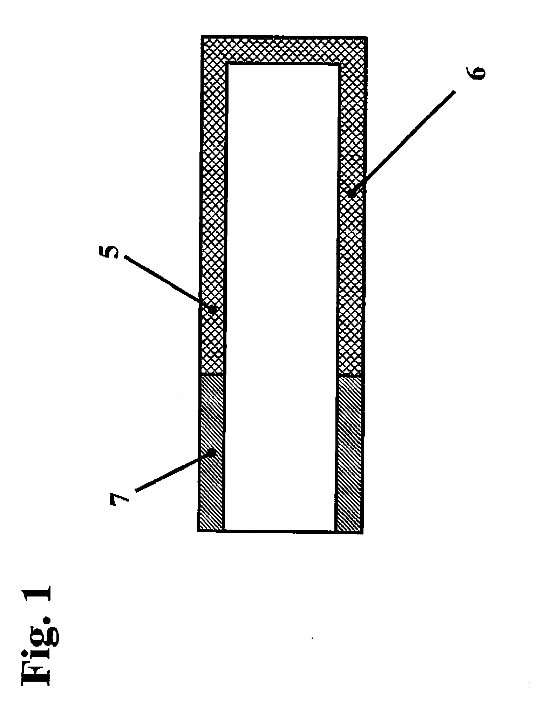

Fig. 1 zeigt eine Schutzkappe 5 im Anschluss an den ersten Verfahrenschritt. Die Schutzkappe 5 ist vorgesehen, um den am stirnseitigen Ende 2 eines Elektrokabels 4 angeordneten Temperatursensor 1 vor schädlichen äußeren Einflüssen zu schützen.
Dargestellt ist eine sogenannte Vorform, bei der der Bereich des Bodens 6 ausvulkanisiert ist, deren dem Boden 6 axial abgewandter stirnseitig offener Rand 7 demgegenüber nicht.
Im ersten Verfahrenschritt wird ein erstes beheizbares Vulkanisationswerkzeug zur Herstellung der Schutzkappe 5 so temperiert, dass die Schutzkappe 5 mit Ausnahme des offenen Rands 7 ausvulkanisiert wird, wobei in einem zweiten Verfahrenschritt die Schutzkappe 5 aus dem ersten Vulkanisationswerkzeug entformt wird.

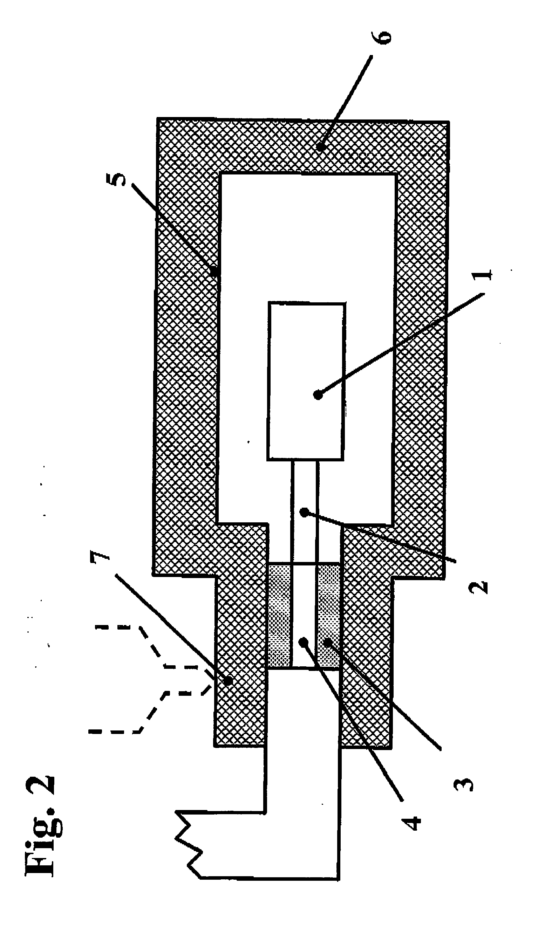

Die im ersten Verfahrenschritt hergestellte und im zweiten Verfahrenschritt entformt Vorform wird in einem dritten Verfahrenschritt über den Temperatursensor 1 auf das dem Temperatursensor 1 zugewandte Ende 2 des Elektrokabels 4 aufgesteckt, wie in Fig. 2 dargestellt.

In Fig. 2 ist ein erstes Ausführungsbeispiele einer gebrauchsfertigen Temperatursensoranordnung dargestellt. Im vierten Verfahrenschritt wird das Elektrokabel 4 mit aufgesteckter Schutzkappe 5 in ein zweites beheizbares Vulkanisationswerkzeug eingelegt, wobei der bis dahin nicht ausvulkanisierte offene Rand 7 der Schutzkappe 5 auf die Isolierung 3 des Elektrokabels 4 gedrückt und unter Zufuhr von Wärme ausvulkanisiert und gleichzeitig mit der Isolierung 3 stoffschlüssig und dichtend verbunden wird.
In gestrichelter Darstellung ist ein weiterer, optionaler Verfahrenschritt gezeigt, bei dem zusätzliches Elastomer im Bereich des offenen Rands 7 der Schutzkappe 5 eingespritzt wird. Dadurch wird der Anpresseffekt des offenen Rands 7 an die Isolierung 3 verbessert.

Der Temperatursensor 1 ist mit allseitigem Abstand von der Schutzkappe 5 umschlossen.

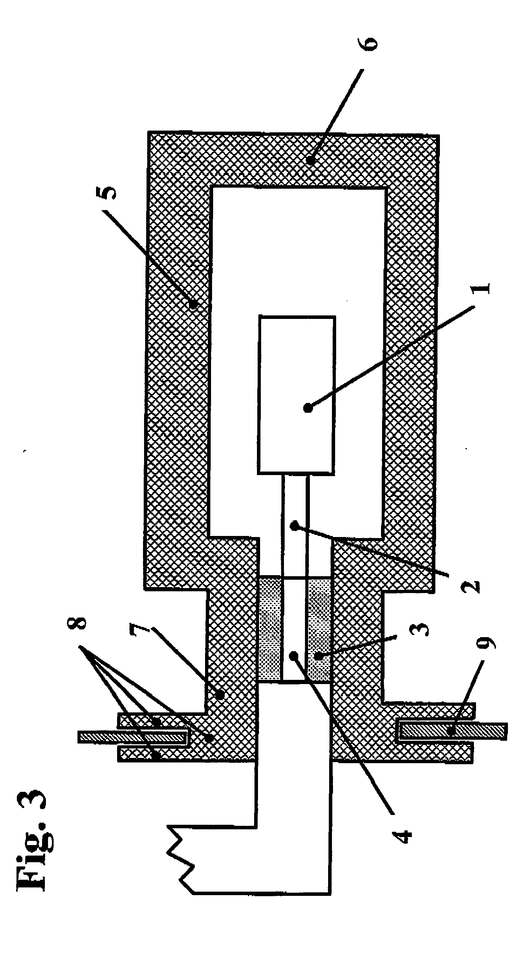

In Fig. 3 ist ein zweites Ausführungsbeispiele der erfindungsgemäßen Temperatursensoranordnung gezeigt, die ebenfalls gebrauchsfertig ist und sich vom Ausführungsbeispiel aus Fig. 2 durch die zusätzliche Haltegeometrie 8 unterscheidet, mit der der Rand 7 versehen ist. Die Haltegeometrie 8 ist zur Befestigung der Temperatursensoranordnung an einem Maschinenelement 9 vorgesehen. Dadurch wird eine stets definierte und sichere Zuordnung der Temperatursensoranordnung bezogen auf das Maschinenelement 9 erreicht.

Die Temperatursensoranordnung weist durch den gut vor schädlichen äußeren Einflüssen geschützten Temperatursensor 1 gute Gebrauchseigenschaften während einer langen Gebrauchsdauer auf und ist einfach, prozesssicher sowie kostengünstig herstellbar.

## Patentansprüche

1. Temperatursensoranordnung, umfassend einen Temperatursensor (1), der an einem stirnseitigen Ende (2) eines mit einer Isolierung (3) ummantelten Elektrokabels (4) angeordnet und mit diesem elektrisch leitend verbunden ist, **dadurch gekennzeichnet, dass** der Temperatursensor (1) von einer Schutzkappe (5) aus elastomerem Werkstoff dichtend umschlossen ist und dass der dem Boden (6) der Schutzkappe (5) axial abgewandte stirnseitig offene Rand (7) der Schutzkappe (5) mit der Isolierung (3) des Elektrokabels (4) kraft- und/oder form- und/oder stoffschlüssig dichtend verbunden ist.

2. Temperatursensoranordnung nach Anspruch 1, **dadurch gekennzeichnet, dass** der Rand (7) eine Haltegeometrie (8) zur Befestigung an einem Maschinenelement (9) aufweist.

3. Temperatursensoranordnung nach einem der Ansprüche 1 oder 2, **dadurch gekennzeichnet, dass** die Schutzkappe (5) eine Dicke von 1 bis 4 mm aufweist.

4. Verfahren zur Herstellung einer Temperatursensoranordnung und einer Schutzkappe gemäß Anspruch 1, wobei in einem ersten Verfahrenschritt ein erstes beheizbares Vulkanisationswerkzeug zur Herstellung der Schutzkappe (5) so temperiert wird, dass die Schutzkappe (5) mit Ausnahme des offenen Rands (7) ausvulkanisiert wird, wobei in einem zweiten Verfahrenschritt die Schutzkappe (5) aus dem ersten Vulkanisationswerkzeug entformt und in einem dritten Verfahrenschritt über den Temperatursensor (1) auf das dem Temperatursensor (1) zugewandte Ende (2) des Elektrokabels (4) aufgesteckt wird, dass in einem vierten Verfahrenschritt das Elektrokabel (4) mit aufgesteckter Schutzkappe (5) in ein zweites beheizbares Vulkanisationswerkzeug eingelegt und der bis dahin nicht ausvulkanisierte offene Rand (7) der Schutzkappe (5) auf die Isolierung (3) gedrückt und unter Zufuhr von Wärme ausvulkanisiert und gleichzeitig mit der Isolierung (3) dichtend verbunden wird.

5. Verfahren nach Anspruch 4, **dadurch gekennzeichnet, dass** während des vierten Verfahrenschritts in einem weiteren Verfahrenschritt zusätzliches Elastomer im Bereich des offenen Rands (7) der Schutzkappe (5) eingespritzt wird.
